# EUROPEAN PATENT APPLICATION

(11) **EP 2 762 289 A1**
(43) Date of publication of application: **06.08.2014**
(21) Application number: 12836697.8
(22) Date of filing: 21.09.2012
(51) Int. Cl.: B29C 45/14, B29C 65/64, B29K 67/00, B29K 81/00, B29K 105/22

(54) **ALUMINUM RESIN BONDED BODY AND METHOD FOR PRODUCING SAME**

(30) Priority: 26.09.2011 JP 2011208624
(71) Applicant: Nippon Light Metal Company, Ltd., Tokyo 140-8628 (JP)
(72) Inventor: IINO Masaki, Tokyo 140-0002 (JP); ENDO Masanori, Shizuoka 421-3203 (JP); YOSHIDA Miyuki, Shizuoka 421-3203 (JP); ISOBE Masashi, Shizuoka 421-3203 (JP)
(74) Representative: Vossius & Partner
(86) International application number: PCT/JP2012/074216
(87) International publication number: WO 2013/047365

(57) **Abstract**

Provided is an aluminum-resin bonded body that expresses excellent bonding strength and does not show a reduction in the strength after a durability test, thus being able to keep the excellent bonding strength over a long period of time. The aluminum-resin bonded body includes: an aluminum substrate formed of aluminum or an aluminum alloy; an oxygen-containing film containing oxygen, which is formed on a surface of the aluminum substrate; and a molded resin formed of a thermoplastic resin, which is bonded onto the oxygen-containing film. The thermoplastic resin is a thermoplastic resin containing an element having an unshared electron pair in a repeat unit and/or at an end.

## Description

### Technical Field

The present invention relates to an aluminum-resin bonded body in which an aluminum substrate formed of aluminum or an aluminum alloy and a molded resin made of a thermoplastic resin are integrally bonded firmly by injection molding of the thermoplastic resin or thermocompression bonding, and to a process for producing the same.

### Background Art

In recent years, in the fields of, for example, various sensor components for automobiles, components for household electrical appliances, and components for industrial equipment, there has been widely used an aluminum-resin bonded body in which an aluminum substrate formed of aluminum or an aluminum alloy, which has high heat dissipating property, and a molded resin made of a thermoplastic resin, which has high insulation performance, is light in weight, and is inexpensive, are integrally bonded. In addition, its applications have been broadened.

In addition,hitherto,asthe aluminum-resin bonded body in which dissimilar materials, i.e., the aluminum substrate and the molded resin are integrally bonded to each other as described above, there has been used one in which the aluminum substrate and the molded resin are bonded to each other with an adhesive agent under pressure. Under such circumstances, recently, as an industrially more suitable bonding method, there has been developed a method involving: inserting an aluminum substrate into an injection molding die; and injecting a molten thermoplastic resin onto a surface of the inserted aluminum substrate, thereby bonding the aluminum substrate and a molded resin to each other simultaneously with molding of the molded resin by injection molding of the thermoplastic resin, and there have been proposed some methods of bonding the aluminum substrate and the molded resin to each other more inexpensively, and further improving bonding strength. In addition, many of such proposals involve subjecting a surface of the aluminum substrate to appropriate surface treatment.

For example, the inventors of the present invention have already proposed: an aluminum/resin integrally injection-molded article characterized in that an aluminum shape and a molded resin are locked with each other through recesses in the aluminum and fitting portions in the thermoplastic resin (Patent Literature 1); and an aluminum alloy member excellent in resin bonding property characterized by having protrusions each formed of a silicon crystal (Patent Literature 2).

In addition, for example, there have been proposed: a technology involving integrating an aluminum alloy product, which is obtained through pretreatment involving immersion in an aqueous solution of one or more kinds selected from ammonia, hydrazine, and a water-soluble amine compound, with a thermoplastic resin composition by injection molding (Patent Literatures 3 and 4); and a technology involving subjecting a metal to electrochemical surface treatment using, as an electrodeposition solution, an aqueous solution of a triazinedithiol, or a solution thereof using any of various organic solvents as its solvent, and then bonding the surface-treated metal to a rubber or a plastic (Patent Literature 5). Further, there have been proposed: a technology involving applying an adhesive agent onto a metal plate or forming an organic film by surface treatment, and then integrating the metal with a resin by injection molding (Patent Literature 6); and a technology involving treating a surface of a metal with an acid or an alkali, followed by treatment with a silane coupling agent, and then bonding the metal to a resin by injection molding (Patent Literature 7).

### Citation List

### Patent Literature

[PTL 1] WO 2009/151099 A1
[PTL 2] JP 2010-174372 A
[PTL 3] JP 3954379 B
[PTL 4] JP 4270444 B
[PTL 5] JP 05-051671 B
[PTL 6] JP 3016331 B
[PTL 7] JP 2003-103562 A

Here, in the method described in Patent Literature 3 or 4, which utilizes ammonia, hydrazine, and a water-soluble amine compound, a period of time after the treatment until the injection molding is limited. Accordingly, the method has a problem in that a period of time in which a stable surface state can be kept is short. In addition, the treatment method described in Patent Literature 5 has a problem in that the treatment is complex. In addition, the method described in Patent Literature 6 or 7 has problems in complexity of the process and high treatment cost.

By the way, as described in Patent Literature 1 or Patent Literature 2, the inventors of the present invention have hitherto mainly proposed physical bonding based on fitting by an anchor effect, and proposed, as an approach thereto, a method involving special etching treatment using a treatment bath containing a halogen ion. Such method has no problem in performance such as bonding strength or airtightness at a bonded portion. However, the method has a different problem in that a gas derived from the halogen is generated during the etching treatment, and hence measures are needed to prevent corrosion of surrounding metal parts and apparatus and contamination of a surrounding environment.

### Summary of Invention

### Technical Problem

In view of the foregoing, the inventors of the present invention have made extensive studies to develop a method of bonding an aluminum substrate and a molded resin made of a thermoplastic resin to each other without causing any problem for surrounding equipment and environment, by a simple operation and at low cost, with excellent bonding strength that can be kept over a long period of time. As a result, the inventors have found that, in the formation of an oxygen-containing film, which contains oxygen, on the surface of an aluminum substrate, and the bonding of a molded resin formed of a thermoplastic resin onto the oxygen-containing film, by using, as the thermoplastic resin, a thermoplastic resin containing an element having an unshared electron pair in a repeat unit and/or at an end, firm bonding that is kept over a long period of time is formed between the oxygen-containing film on the surface of the aluminum substrate and the molded resin in the bonding between the aluminum substrate and the molded resin by injection molding or thermocompression bonding (bonding between aluminum and the resin). Thus, the inventors have completed the present invention.

Therefore, an object of the present invention is to provide an aluminum-resin bonded body that expresses excellent bonding strength between aluminum and a resin and does not show a reduction in the strength after a durability test, thus being able to keep the excellent bonding strength between aluminum and the resin over a long period of time.

### Solution to Problem

That is, the present invention relates to an aluminum-resin bonded body, including: an aluminum substrate formed of aluminum or an aluminum alloy; an oxygen-containing film containing oxygen, which is formed on a surface of the aluminum substrate; and a molded resin formed of a thermoplastic resin, which is bonded onto the oxygen-containing film, in which the thermoplastic resin includes a thermoplastic resin containing an element having an unshared electron pair in a repeat unit and/or at an end.

Further, the present invention relates to a process for producing an aluminum-resin bonded body, including: a film-forming step of forming an oxygen-containing film on a surface of an aluminum substrate formed of aluminum or an aluminum alloy; and a resin-molding step of forming a molded resin on the oxygen-containing film of the surface-treated aluminum substrate obtained in the film-forming step, by injection molding of a thermoplastic resin, to produce an aluminum-resin bonded body in which the aluminum substrate and the molded resin are bonded through intermediary of the oxygen-containing film, in which the thermoplastic resin includes a thermoplastic resin containing an element having an unshared electron pair in a repeat unit and/or an end.

Further, the present invention relates to a process for producing an aluminum-resin bonded body, including: a film-forming step of forming an oxygen-containing film on a surface of an aluminum substrate formed of aluminum or an aluminum alloy; a resin-molding step of forming a molded resin by injection molding of a thermoplastic resin; and an aluminum-resin-bonding step of bonding the molded resin obtained in the resin-molding step onto the oxygen-containing film of the surface-treated aluminum substrate obtained in the film-forming step, by thermocompression bonding, to produce an aluminum-resin bonded body in which the aluminum substrate and the molded resin are bonded through intermediary of the oxygen-containing film, in which the thermoplastic resin includes a thermoplastic resin containing an element having an unshared electron pair in a repeat unit and/or an end.

In the present invention, the material, shape, and the like of the aluminum substrate serving as a base material are not particularly limited as long as the aluminum substrate is formed of aluminum or an aluminum alloy. The material, shape, and the like of the aluminum substrate may be determined on the basis of applications of the aluminum-resin bonded body to be formed using the aluminum substrate and various physical properties required for the applications, such as strength, corrosion resistance, and processability.

In addition, the oxygen-containing film to be formed on the surface of such aluminum substrate in the film-forming step is not particularly limited as long as its adhesion strength with the aluminum substrate is satisfactory. The oxygen-containing film is preferably a film containing a zinc element obtained by zinc-containing film-forming treatment using a zinc ion-containing alkali aqueous solution, or any film selected from films containing any one kind or two or more kinds of aluminum compounds selected from the group consisting of Al(OH)₃, AlO(OH), Al₂O₃, Al(PO₄), Al₂(HPO₄)₃, Al(H₂PO₄)₃, and Al(H₂PO₄)₃ derived from aluminum film-forming treatment performed in a wet and electroless manner, more preferably a film formed on the surface of the aluminum substrate by laser treatment.

Here, the zinc-containing film-forming treatment to be performed in the film-forming step of forming an oxygen-containing film on a surface of an aluminum substrate has only to allow a film containing oxygen together with a zinc element in the form of zinc oxide (ZnO), zinc iron oxide (ZnFeO), zinc aluminum oxide (ZnAlO), or the like to be formed on the surface of the aluminum substrate. Thus, when the thermoplastic resin contains an element having an unshared electron pair, firm bonding strength between aluminum and the resin is achieved between the oxygen-containing film and the molded resin to be formed thereon upon molding of the molded resin by injection molding of the thermoplastic resin, or by thermocompression bonding with the molded resin obtained by molding the thermoplastic resin.

In addition, the zinc-containing film-forming treatment using the zinc ion-containing alkali aqueous solution is preferably performed by using a zinc ion-containing alkali aqueous solution containing an alkali hydroxide (MOH) and a zinc ion (Zn²⁺) at a weight ratio (MOH/Zn²⁺) of 1 or more and 100 or less, preferably 2 or more and 20 or less, more preferably 3 or more and 10 or less, and bringing the zinc ion-containing alkali aqueous solution into contact with the surface of the aluminum substrate at normal temperature to form a zinc-containing film containing oxygen on the surface of the aluminum substrate. When the weight ratio (MOH/Zn²⁺) of the alkali hydroxide (MOH) to the zinc ion (Zn²⁺) is less than 1 (MOH<Zn²⁺), zinc is not sufficiently dissolved and hence its effect is not exhibited sufficiently. In contrast, when the weight ratio is more than 100 (MOH>100 Zn²⁺), the dissolution of the aluminum substrate becomes faster than the replacement precipitation of zinc, and thus zinc is hardly precipitated on the surface of the aluminum substrate.

Herein, at least one kind selected from the following alkali hydroxides is preferably used as the alkali source in the zinc ion-containing alkali aqueous solution: sodium hydroxide, potassium hydroxide, and lithium hydroxide. In addition, at least one kind selected from the following compounds is preferably used as the zinc ion source in the zinc ion-containing alkali aqueous solution: zinc oxide, zinc hydroxide, zinc peroxide, zinc chloride, zinc sulfate, and zinc nitrate.

In addition, the zinc ion-containing alkali aqueous solution desirably has an alkali hydroxide concentration of 10 g/L or more and 1,000 g/L or less, preferably 50 g/L or more and 300 g/L or less. In addition, the zinc ion-containing alkali aqueous solution desirably has a zinc ion concentration of 1 g/L or more and 200 g/L or less, preferably 10 g/L or more and 100 g/L or less. When the composition of the zinc ion-containing alkali aqueous solution is adjusted within such range, aluminum and a zinc ion cause a replacement reaction on the surface of the aluminum substrate, and thus aluminum is dissolved and the zinc ion is precipitated as a fine particle. As a result, an oxygen-containing filmcontaining a zinc element is formed on the surface of the aluminum substrate. That is, aluminum is dissolved while forming a recess, zinc is precipitated in the recess, and thus the oxygen-containing film containing a zinc element is formed. Here, when the alkali hydroxide concentration is less than 10 g/L, there arises a problem in that the formation of the oxygen-containing film containing a zinc element becomes insufficient. In contrast, when the alkali hydroxide concentration is more than 1,000 g/L, there arises a problem in that the rate of dissolution of aluminum by the alkali is high and the oxygen-containing film containing a zinc element is not formed. In addition, when the zinc ion concentration is less than 1 g/L, there arises a problem in that the formation of the zinc-containing film takes a long period of time. In contrast, when the zinc ion concentration is more than 200 g/L, there arises a problem in that the rate of precipitation of zinc cannot be controlled and an uneven surface is formed.

Further, aluminum film-forming treatment to be performed in the film-forming step of forming an oxygen-containing film on the surface of an aluminum substrate is as follows: an oxygen-containing film containing any one kind or two or more kinds of aluminum compounds selected fromAl (OH)₃, AlO(OH), Al₂O₃, Al(PO₄), Al₂(HPO₄)₃, Al(H₂PO₄)₃, and AlOSiO₂ is formed on the surface of an aluminum substrate formed of aluminum or an aluminum alloy by treating the aluminum substrate by aluminum film-forming treatment to be performed in a wet and electroless manner such as : warm water immersion treatment involving immersion in warm water at 50°C or more for 60 sec or more; water vapor treatment involving exposure to a water vapor atmosphere under pressurized conditions of 0.1 MPa or more and 1 min or more; or phosphoric acid treatment involving immersion in a phosphoric acid-based aqueous solution containing any one kind or two or more kinds of phosphate ion species selected from the group consisting of a phosphate ion, a monohydrogen phosphate ion, and a dihydrogen phosphate ion in the range of from 0.1 to 100 g/L for 30 sec to 30 min, followed by drying with hot air at 80 to 400°C for 30 sec to 30 min.

In addition, any one kind of treatment out of the warm water immersion treatment, the water vapor treatment, and the phosphoric acid treatment may be performed alone to form the oxygen-containing film on the surface of the aluminum substrate. Alternatively, as required, any two kinds of treatment thereof may be performed in combination to form a required oxygen-containing film on the surface of the aluminum substrate.

Further, the laser treatment to be performed in the film-forming step of forming an oxygen-containing film on a surface of an aluminum substrate has only to involve causing oxidation by heating the vicinity of the surface of the aluminum substrate, preferably only the vicinity of the surface locally, to a temperature equal to or higher than the melting temperature of the aluminum substrate, to precipitate aluminum oxide (Al₂O₃) in the vicinity of the surface of the aluminum substrate so that an oxygen-containing film containing the aluminum oxide (Al₂O₃) can be formed. The laser treatment may be performed by, for example, using a laser etching apparatus.

The surface-treated aluminum substrate thus obtained in the film-forming step by forming the oxygen-containing film on the surface of the aluminum substrate desirably has an oxygen content, which is measured with an EPMA in a surface layer thereof ranging from an outermost surface to a depth of 3 µm, of 0.1 wt% or more and 48 wt% or less, preferably 0.5 wt% or more and 20 wt% or less, more preferably 1 wt% or more and 10 wt% or less. When the oxygen content in the surface layer of the surface-treated aluminum substrate is less than 0.1 wt%, it may become difficult to achieve sufficient bonding strength between aluminum and the resin. In contrast, increasing the oxygen content to more than 48 wt% involves difficulty in production.

In the present invention, the surface-treated aluminum substrate having the oxygen-containing film on its surface obtained in the film-forming step is subjected to the resin-molding step of integrally bonding a molded resin onto the oxygen-containing film by injection molding of a thermoplastic resin to produce the aluminum-resin bonded body. Alternatively, the resin-molding step of forming a molded resin by injection molding of a thermoplastic resin, and the aluminum-resin bonding step of integrally bonding the obtained molded resin onto the oxygen-containing film of the surface-treated aluminum substrate by thermocompression bonding using means such as laser welding, vibration welding, ultrasonic welding, hot press welding, hot plate welding, non-contact hot plate welding, or high frequency welding are performed to produce the aluminum-resin bonded body.

In addition, in the present invention, as the thermoplastic resin to be used in the resin-molding step, there is used a thermoplastic resin containing an element having an unshared electron pair in a repeat unit and/or at an end. Herein, the element having an unshared electron pair of the thermoplastic resin is preferably any one kind or two or more kinds selected from sulfur, oxygen, and nitrogen. It should be noted that such element having an unshared electron pair contained in the repeat unit of the thermoplastic resin may be contained in the main chain of the repeat unit, or may be contained in a side chain thereof.

Specific examples of such thermoplastic resin containing an element having an unshared electron pair in a repeat unit and/or at an end include: a sulfur element-containing resin such as polyphenylene sulfide (PPS) or a sulfone-based resin; a polyester-based resin such as polybutylene terephthalate (PBT); a liquid crystal polymer; an oxygen atom-containing resin such as a polycarbonate-based resin, a polyacetal-based resin, a polyether-based resin, or a polyphenylene ether-based resin; and a nitrogen atom-containing thermoplastic resin such as polyamide (PA), ABS, polyimide, or polyether imide.

In the present invention, in the production of the molded resin to be bonded onto the surface of the aluminum substrate having the oxygen-containing film described above, a particularly preferred thermoplastic resin is such a thermoplastic resin that a molded resin molded therefrom has a peak derived from a carbonyl group (C=O) (around 1,730 cm⁻¹) in IR analysis.

In addition, in the present invention, the oxygen-containing film may be formed on the entire surface of the aluminum substrate serving as a base material, and the molded resin may be bonded to only a required portion of the obtained surface-treated aluminum substrate by injection molding or by thermocompressionbonding. Alternatively,in consideration of cost, the oxygen-containing film may be formed on only part or a required portion of the surface of the aluminum substrate, and the molded resin may be bonded to the required portion of the obtained surface-treated aluminum substrate by injection molding or by thermocompressionbonding. In addition, when the oxygen-containing film is formed on only part or a required portion of the surface of the aluminum substrate, it is recommended to: mask portions except the portion on which the oxygen-containing film is to be formed with a masking tape or the like; then perform treatment for forming the oxygen-containing film; and subsequently remove the masking tape or the like of the masked portion.

In the process for producing an aluminum-resin bonded body in the present invention, as required, prior to the film-forming step of forming an oxygen-containing film, any one or more kinds of treatment selected from degreasing treatment, etching treatment, desmutting treatment, chemical polishing treatment, and electrolytic polishing treatment may be performed as pretreatment for the surface of the aluminum substrate.

The degreasing treatment to be performed as the pretreatment may be performed using a general degreasing bath containing sodium hydroxide, sodium carbonate, sodium phosphate, a surfactant, and the like under the treatment conditions of generally an immersion temperature of 15°C or more and 55°C or less, preferably 25°C or more and 40°C or less, and an immersion time of 1 min or more and 10 min or less, preferably 3 min or more and 6 min or less.

In addition, the etching treatment to be performed as the pretreatment is generally performed using an aqueous solution of an alkali such as sodium hydroxide, or an acid aqueous solution such as a mixed aqueous solution of sulfuric acid and phosphoric acid. In addition, when the alkali aqueous solution is used, it is recommended to perform immersion treatment using an alkali aqueous solution having a concentration of 20 g/L or more and 200 g/L or less, preferably 50 g/L or more and 150 g/L or less under the treatment conditions of an immersion temperature of 30°C or more and 70°C or less, preferably 40 °C or more and 60 °C or less, and a treatment time of 0.5 min or more and 5 min or less, preferably 1 min or more and 3 min or less. In addition, when the mixed aqueous solution of sulfuric acid and phosphoric acid as the acid aqueous solution is used, it is recommended to perform immersion treatment using a solution having a sulfuric acid concentration of 10 g/L or more and 500 g/L or less, preferably 30 g/L or more and 300 g/L or less, and a phosphoric acid concentration of 10 g/L or more and 1,200 g/L or less, preferably 30 g/L or more and 500 g/L or less under the treatment conditions of an immersion temperature of 30°C or more and 110°C or less, preferably 55°C or more and 75°C or less, and an immersion time of 0.5 min or more and 15 min or less, preferably 1 min or more and 6 min or less.

Further, for the desmutting treatment to be performed as the pretreatment, it is desired to perform, for example, immersion treatment using a desmutting bath containing an aqueous solution of nitric acid having a concentration of from 1 to 30% under the treatment conditions of an immersion temperature of 15°C or more and 55°C or less, preferably 25°C or more and 40°C or less, and an immersion time of 1 min or more and 10 min or less, preferably 3 min or more and 6 min or less.

It should be noted that a hitherto known method may be adopted for the chemical polishing treatment or electrolytic polishing treatment to be performed as the pretreatment.

Although the principle behind the bonding between the aluminum substrate and the molded resin in the present invention still has many unknown aspects, we generally consider as described below on the basis of the following verification results.

That is, a plurality of surface-treated aluminum substrates each having an oxygen-containing film on the surface of an aluminum substrate were formed. Some of the surface-treated aluminum substrates were each treated as follows: a PPS molded body was bonded onto its surface by injection molding of polyphenylene sulfide (PPS) having a carbonyl group (C=O) to provide an aluminum-PPS bonded body. The other surface-treated aluminum substrates were each treated as follows: first, stearic acid was volatilized in an electric furnace kept at 100°C, the surface-treated aluminum substrate was exposed therein for 24 hr to provide a stearic acid-treated aluminum substrate having a monomolecular film of stearic acid on the oxygen-containing film, and a PPS molded body was bonded onto the surface of the stearic acid-treated aluminum substrate by injection molding of PPS having a carbonyl group (C=O) to provide a stearic acid-treated aluminum-PPS bonded body. Measurement was performed for a difference in bonding strength between the aluminum-PPS bonded body and the stearic acid-treated aluminum-PPS bonded body.

The result was as follows: the bonding strength in the stearic acid-treated aluminum-PPS bonded body was evidently reduced as compared to the bonding strength of the aluminum-PPS bonded body.

Stearic acid has both a carboxyl group (COOH), which is a hydrophilic group, and an alkyl group (C₁₇H₃₅), which is a hydrophobic group, and has property of forming a monomolecular film, which is one molecule thick. It is considered that, in the stearic acid-treated aluminum-PPS bonded body, the oxygen-containing film of the aluminum substrate and the carboxyl group side of stearic acid formed chemical bonding, the alkyl group side was thus brought into contact with the PPS molded body, chemical bonding between the aluminum substrate and the PPS molded body was consequently inhibited, and hence the bonding strength reduced as compared to the bonding strength of the aluminum-PPS bonded body.

In addition, the surfaces of the surface-treated aluminum substrate before and after stearic acid treatment were observed and investigated in a comparative manner, but no difference was found in the structure of the surface irrespective of the presence or absence of the monomolecular film of stearic acid. On the other hand, when a liquid droplet was dropped onto the surface-treated aluminum substrate after the stearic acid treatment, and the contact angle therebetween was measured, the contact angle was close to 180°, and the liquid droplet adopted a substantially spherical shape. The results support the localization of the alkyl group side of stearic acid on the outermost surface layer side of the aluminum substrate.

It is considered from the foregoing that, between the surface-treated aluminum substrate and the molded resin having a carbonyl group (C=O) in the aluminum-resin bonded body of the present invention, chemical bonding is formed between the oxygen of the oxygen-containing film and the carbonyl group in the resin, and an action by the chemical bonding expresses an enhancing effect on the bonding strength between the aluminum substrate and the molded resin.

### Advantageous Effects of Invention

The aluminum-resin bonded body of the present invention is obtained by: coating the surface of the aluminum substrate with the oxygen-containing film; and then bonding the molded resin onto the oxygen-containing film on the surface of the aluminum substrate by injection molding of the thermoplastic resin containing an element having an unshared electron pair, or by thermocompression bonding of the molded resin obtained through injection molding of the thermoplastic resin. Accordingly, the aluminum substrate and the molded resin are firmly bonded through the intermediary of the oxygen-containing film, and moreover, excellent bonding strength between aluminum and the resin can be kept over a long period of time.

In addition, according to the process for producing an aluminum-resin bonded body of the present invention, in the film-forming step of forming an oxygen-containing film on a surface of an aluminum substrate, gas generation and the like do not occur and the operation can be performed at normal temperature, causing no problem for the surrounding equipment and environment, and an aluminum-resin bonded body that can exhibit excellent bonding strength between aluminum and the resin over a long period of time can be produced by a simple operation and at low cost.

### Brief Description of Drawings

FIG. 1 is an explanatory diagram for illustrating an aluminum-resin bonded body for bonding strength produced in Example 1 of the present invention.
FIG. 2 is an explanatory diagram for illustrating a method for an evaluation test for bonding strength between aluminum and a resin carried out in Example 1 of the present invention.
FIG. 3 is an explanatory diagram for illustrating an aluminum-resin bonded body for an airtightness test produced in Example 1 of the present invention.
FIG. 4 is an explanatory diagram for illustrating a method for an evaluation test for airtightness between aluminum and a resin carried out in Example 1 of the present invention.

### Description of Embodiments

Hereinafter, the aluminum-resin bonded body and process for producing the same of the present invention are specifically described on the basis of Examples and Comparative Examples.

### (Example 1)

### (1) Production of surface-treated aluminum substrate

An aluminum substrate for a bonding strength test measuring 40 mm×40 mm was cut out of a commercially available aluminum plate (A5052; plate thickness: 2.0 mm). Further, a 10-mmϕ hole was made in the center of the aluminum substrate cut out so as to measure 40 mm×40 mm to produce an aluminum substrate for an airtightness test. In addition, a zinc ion-containing aqueous solution of sodium having a sodium hydroxide concentration of 100 g/L and a zinc oxide concentration of 25 g/L (20 g/L in terms of Zn⁺) was prepared as a film-forming treatment agent. Next, the aluminum substrate was immersed in the zinc ion-containing aqueous solution of sodium under room temperature for 3 min, and then washed with water to produce a surface-treated aluminum substrate for a test having formed on its surface an oxygen-containing film containing a zinc element.

### (2) Measurement of oxygen content in film

The obtained surface-treated aluminum substrate was subjected to mapping analysis with an EPMA (manufacturedbySHIMADZU: EPMA1610) involving measurement in 512 steps in each of vertical and horizontal directions at an irradiation diameter of 40 µm/step. Here, the measurement area is 20.48 mm×20.48 mm, the sampling time per step is 20 ms, the accelerating voltage is 15 kV, and the resolution of oxygen in a depth direction is 3 µm or less. Next, the detected oxygen intensity was calculated in terms of weight percentage (wt%) on the basis of a calibration curve prepared in advance. It should be noted that the calibration curve used was prepared on the basis of the following two points: the oxygen intensity of an Al₂O₃ standard sample (oxygen content: 48 wt%) and the oxygen intensity of a high-purity Al foil.

Table 1 shows the results.

### (3) Production of aluminum-resin bonded body for bonding strength test

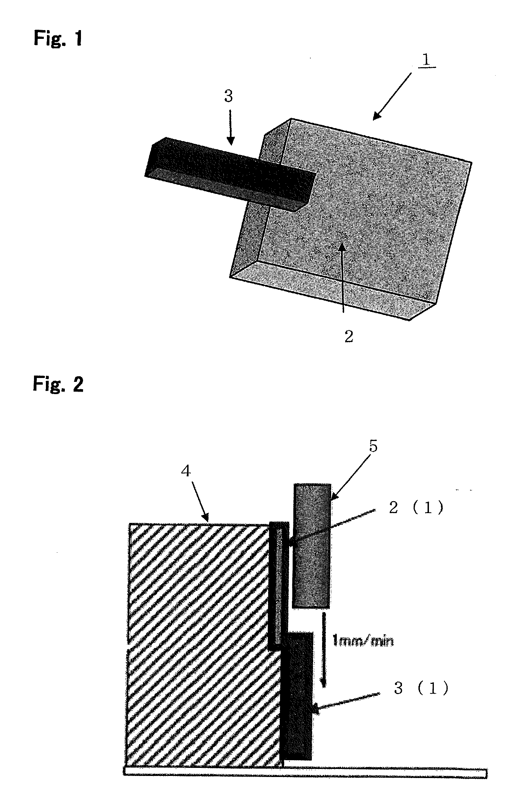

PPS (manufactured by POLYPLASTICS CO., LTD., trade name: FORTRON) was used as a thermoplastic resin, the surface-treated aluminum substrate for a bonding strength test obtained in the foregoing was set in a die of an injection molding machine, and injection molding of PPS was performed under the injection molding conditions of a die temperature of 150°C, a resin temperature of 320°C, an injection speed of 100 mm/s, a hold pressure of 50 MPa, and a pressure hold time of 3 sec. Thus, as illustrated in FIG. 1, a PPS molded body 3 measuring 5 mm×10 mm×30 mm was molded, and the PPS molded body 3 was bonded onto the zinc-containing film (not shown) of a surface-treated aluminum substrate 2 in an area of 5 mm×10 mm to produce an aluminum-resin bonded body 1 for a bonding strength test.

### (4) Production of aluminum-resin bonded body for airtightness test

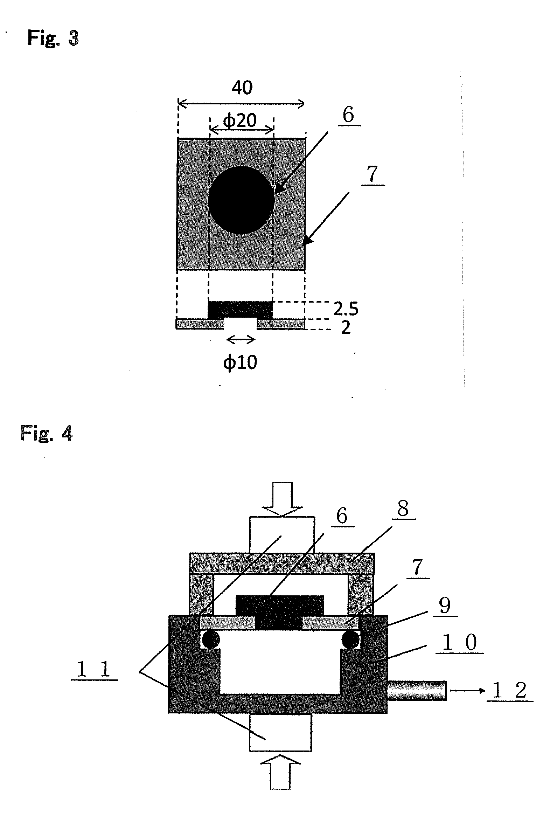

PPS (manufactured by POLYPLASTICS CO., LTD., trade name: FORTRON) was used as a thermoplastic resin, the surface-treated aluminum substrate for a test obtained in the foregoing was set in a die of an injection molding machine, and injection molding of PPS was performed under the injection molding conditions of a die temperature of 150°C, a resin temperature of 320°C, an injection speed of 100 mm/s, a hold pressure of 50 MPa, and a pressure hold time of 3 sec. Thus, as illustrated in FIG. 3, a PPS molded body 6 measuring 520 mmϕ was molded, and the PPS molded body 6 was bonded onto the zinc-containing film (not shown) of a surface-treated aluminum substrate 7 in an area of 235.5 mm² to produce an aluminum-resin bonded body 2 for an airtightness test.

### (5) IR analysis of resin portion of aluminum-resin bonded body

The aluminum-resin bonded bodies 1 and 2 for tests thus produced were each subjected to IR analysis of a molded resin portion using an IR analysis apparatus (Agilent Technologies 660 FastImage-IR) by a micro-ATR method to confirm the presence or absence of a peak derived from a carbonyl group (C=O) (around 1,730 cm⁻¹) . The result was as shown in Table 1. Specifically, a peak derived from a carbonyl group (C=O) was detected.

### (6) Evaluation tests for bonding properties of aluminum-resin bonded bodies after durability test

The aluminum-resin bonded bodies for tests thus produced were each subjected to a durability test for an aluminum-resin bonded body involving: leaving the aluminum-resin bonded body to stand under an environment having a temperature of 85°C and a humidity of 85% for 1,000 hr; and evaluating the corrosion resistance of the aluminum-resin bonded body. The aluminum-resin bonded bodies after the durability test were subjected to evaluation tests for their bonding properties between aluminum and the resin (bonding strength and airtightness) by the following methods.

As illustrated in FIG. 2, as an evaluation test for bonding strength, a test for evaluating the shear strength of the bonded portion of an aluminum-resin bonded body was carried out by a method involving: fixing the surface-treated aluminum substrate 2 of the aluminum-resin bonded body 1 to a jig 4; and applying a load 5 to the upper end of the PPS molded body 3 from thereabove at a speed of 1 mm/min. to break the bonded portion between the surface-treated aluminum substrate 2 and the PPS molded body 3. Thus, the bonding strength of the aluminum-resin bonded body after the durability test was evaluated.

Table 1 shows the results.

As illustrated in FIG. 3 and FIG. 4, as an evaluation test for airtightness, a test was carried out, which involved: fixing the surface-treated aluminum substrate 7 of the aluminum-resin bonded body 2 to a jig 8 for aluminum fixation and an airtightness test jig 10 through the intermediary of an O-ring 9 with a clamp 12; applying air at a positive pressure of +0.5 MPa for 3 min; and measuring an air leak amount at the bonded portion of the PPS molded body 6. An evaluation was made by marking the case where no air leak was observed within the evaluation time with Symbol "○", and marking the case where an air leak was observed with Symbol "×".

Table 1 shows the results.

### (Examples 2 to 9)

Aluminum-resin bonded bodies for tests were produced in the same manner as in Example 1 except that a substrate made of the material shown in Table 1 was used as the aluminum substrate, an aqueous solution having the liquid composition shown in Table 1 was used as the zinc ion-containing alkali aqueous solution, and the alkali hydroxide concentration and the zinc ion concentration were set to the concentrations shown in Table 1. Then, IR analysis of a resin portion, and evaluation tests for bonding strength and airtightness were performed in the same manner as in Example 1.

Table 1 shows the results.

### (Examples 10 and 11)

A substrate made of the material shown in Table 1 was used as the aluminum substrate, and was subjected to pretreatment involving immersion in a 30-wt% aqueous solution of nitric acid at normal temperature for 5 min, followed by sufficient water washing with ion-exchanged water, subsequent immersion in a 5-wt% solution of sodium hydroxide at 50°C for 1 min, followed by water washing, and further immersion in a 30-wt% aqueous solution of nitric acid at normal temperature for 3 min, followed by water washing. Next, hydration treatment involving immersion in hot water at 80°C for 20 min was performed. Thus, aluminum film-forming treatment was performed to form an oxygen-containing film containing an aluminum compound AlO(OH) on the surface of the aluminum substrate. Aluminum-resin bonded bodies for tests were produced in the same manner as in Example 1 except for the foregoing. Then, IR analysis of a resin portion, and evaluation tests for bonding strength and airtightness were performed in the same manner as in Example 1.

Table 1 shows the results.

### (Examples 12 and 13)

Aluminum-resin bonded bodies for tests were produced in the same manner as in Example 1 except that: a substrate made of the material shown in Table 1 was used as the aluminum substrate; and irradiation was performed in a single direction at a pitch of 50 µm by laser etching treatment (apparatus name: Miyachi/ML-7112A, laser light wavelength: 1,064 nm, spot diameter: 50 to 60 µm, oscillation mode: Q-switch pulse, frequency: 10 kHz) to form a thermally oxidized film (oxygen-containing film) in the surface layer. Then, IR analysis of a resin portion, and evaluation tests for bonding strength and airtightness were performed in the same manner as in Example 1.

Table 1 shows the results.

### (Example 14)

Aluminum-resin bonded bodies for tests were produced in the same manner as in Example 1 above except that polybutylene terephthalate (PBT) was used as the thermoplastic resin. Then, IR analysis of a resin portion, and evaluation tests for bonding strength and airtightness were performed in the same manner as in Example 1. It should be noted that injection molding of PBT was performed under the injectionmolding conditions of a die temperature of 100°C, a resin temperature of 250°C, an injection speed of 100 mm/s, a hold pressure of 50 MPa, and a pressure hold time of 2 sec.

Table 1 shows the results.

### (Example 15)

Aluminum-resin bonded bodies for tests were produced in the same manner as in Example 1 above except that, prior to the treatment with zinc-containing sodiumhydroxide, etching treatment with sodium hydroxide and desmutting treatment with nitric acid were each carried out as pretreatment. Then, IR analysis of a resin portion, and evaluation tests for bonding strength and airtightness were performed in the same manner as in Example 1. It should be noted that the etching treatment with sodium hydroxide was immersion treatment in a 5-wt% aqueous solution at 60°C for 1 min and the desmutting treatment with nitric acid was carried out in a 10-wt% aqueous solution at 25°C for 3 min.

Table 1 shows the results.

### (Comparative Example 1)

Aluminum-resin bonded bodies for tests according to Comparative Example 1 were produced in the same manner as in Example 1 above except that the film-forming step of forming a zinc-containing film using a film-forming treatment agent was not performed. Then, IR analysis of a resin portion, and evaluation tests for bonding strength and airtightness were performed in the same manner as in Example 1.

Table 1 shows the results.

### (Comparative Example 2)

Aluminum-resin bonded bodies for tests according to Comparative Example 2 were produced in the same manner as in Example 1 above except that, after the formation of the zinc-containing film using the film-forming treatment agent, electroless NiP-plating treatment was further performed thereon to change the zinc-containing film to an NiP-plated film. Then, IR analysis of a resin portion, and evaluation tests for bonding strength and airtightness were performed in the same manner as in Example 1.

Table 1 shows the results.

### (Comparative Example 3)

Aluminum-resin bonded bodies for tests were produced in the same manner as in Example 1 except that a substrate made of the material shown in Table 1 was used as the aluminum substrate, and was immersed in a 30-wt% aqueous solution of nitric acid at normal temperature for 5 min, followed by sufficient water washing with ion-exchanged water and drying, to form an aluminum substrate having a naturally oxidized film on the surface of the aluminum substrate. Then, IR analysis of a resin portion, and evaluation tests for bonding strength and airtightness were performed in the same manner as in Example 1.

Table 1 shows the results.

**[Table 1]**

| | Aluminum substrate | Composition of film-forming treatment liquid | Oxygen-containing film | | Molded resin | | Evaluation of bonding properties | |
|---|---|---|---|---|---|---|---|---|
| | | | Kind | Oxygen content (wt%) | Kind of resin composition | Presence or absence of C=O group | Breaking load (N) | Airtightness |
| Example 1 | A5052 | NaOH: 100 g/L | ZnO | 3 | PPS | Present | 300 | ○ |
| | | Zn²⁺: 20 g/L | | | | | | |
| Example 2 | A5052 | NaOH: 100 g/L | ZnO | 8 | PPS | Present | 300 | ○ |
| | | Zn²⁺: 100 g/L | | | | | | |
| Example 3 | A5052 | NaOH: 500 g/L | ZnO | 0.8 | PPS | Present | 250 | ○ |
| | | Zn²⁺: 10 g/L | | | | | | |
| Example 4 | A5052 | NaOH: 300 g/L | ZnO | 2.4 | PPS | Present | 250 | ○ |
| | | Zn²⁺: 30 g/L | | | | | | |
| Example 5 | A5052 | NaOH: 10 g/L | ZnO | 0.1 | PPS | Present | 200 | ○ |
| | | Zn²⁺: 1 g/L | | | | | | |
| Example 6 | A5052 | LiOH: 100 g/L | ZnO | 1.6 | PPS | Present | 250 | ○ |
| | | Zn²⁺: 20 g/L | | | | | | |
| Example 7 | A5052 | KOH: 100 g/L | ZnO | 1.6 | PPS | Present | 250 | ○ |
| | | zn²⁺: 20 g/L | | | | | | |
| Example 8 | A1050 | NaOH: 100 g/L | ZnO | 1.6 | PPS | Present | 250 | ○ |
| | | Zn²⁺: 20 g/L | | | | | | |
| Example 9 | ADC12 | NaOH: 100 g/L | ZnO | 0.3 | PPS | Present | 150 | ○ |
| | | Zn²⁺: 20 g/L | | | | | | |
| Example 10 | A5052 | H₂O | AlO(OH) | 8 | PPS | Present | 300 | ○ |
| Example 11 | ADC12 | H₂O | AlO(OH) | 6 | PPS | Present | 300 | ○ |
| Example 12 | A5052 | Dry (laser) | Al₂O₃ | 8 | PPS | Present | 300 | ○ |
| Example 13 | ADC12 | Dry (laser) | Al₂O₃ | 8 | PPS | Present | 300 | ○ |
| Example 14 | A5052 | NaOH: 100 g/L | ZnO | 3 | PBT | Present | 300 | ○ |
| | | Zn²⁺: 20 g/L | | | | | | |
| Example 15 | A5052 | NaOH: 100 g/L | ZnO | 3 | PPS | Present | 300 | ○ |
| | | Zn²⁺: 20 g/L | | | | | | |
| Comparative Example 1 | A5052 | - | - | 0.03 | PPS | Present | 0 | × |
| Comparative Example 2 | A5052 | Electroless NiP | Ni | - | PPS | Present | 0 | × |
| Comparative Example 3 | A5052 | 30 wt%-HNO₃ | Al₂O₃ | 0.02 | PPS | Present | 50 | × |

### Industrial Applicability

The aluminum-resin bonded body of the present invention has excellent bonding strength both before and after a durability test, and hence can be suitably utilized in the production of various components such as various sensor components for automobiles, components for household electrical appliances, and components for industrial equipment.

### Reference Signs List

1 ... aluminum-resin bonded body, 2 ... surface-treated aluminum substrate, 3 ... molded resin, 4 ... jig, 5 ... load, 6 ... molded resin, 7 ... surface-treated aluminum substrate, 8 ... jig for aluminum fixation, 9 ... O-ring, 10 ... airtightness test jig, 12 ... clamp, 12 ... leak tester.

## Claims

1. An aluminum-resin bonded body, comprising:
an aluminum substrate formed of aluminum or an aluminum alloy;
an oxygen-containing film containing oxygen, which is formed on a surface of the aluminum substrate; and
a molded resin formed of a thermoplastic resin, which is bonded onto the oxygen-containing film,
wherein the thermoplastic resin comprises a thermoplastic resin containing an element having an unshared electron pair in a repeat unit and/or at an end.

2. An aluminum-resin bonded body according to claim 1, wherein, before the molded resin is bonded, the aluminum substrate having the oxygen-containing film on the surface has an oxygen content, which is measured with an EPMA in a surface layer thereof ranging from an outermost surface to a depth of 3 µm, of from 0.1 to 48 wt%.

3. An aluminum-resin bonded body according to claim 1 or 2, wherein the molded resin is bonded onto the oxygen-containing film by a bonding method based on injection molding or thermocompression bonding.

4. An aluminum-resin bonded body according to any one of claims 1 to 3, wherein the oxygen-containing film comprises a film containing a zinc element obtained by zinc-containing film-forming treatment using a zinc ion-containing alkali aqueous solution.

5. An aluminum-resin bonded body according to any one of claims 1 to 3, wherein the oxygen-containing film comprises a film containing any one kind or two or more kinds of aluminum compounds selected from the group consisting of Al(OH)₃, AlO(OH), Al₂O₃, Al(PO₄), Al₂(HPO₄)₃, Al(H₂PO₄)₃, and Al(H₂PO₄)₃ derived from aluminum film-forming treatment performed in a wet and electroless manner.

6. An aluminum-resin bonded body according to any one of claims 1 to 3, wherein the oxygen-containing film comprises a film formed on the surface of the aluminum substrate by laser treatment.

7. An aluminum-resin bonded body according to any one of claims 1 to 6, wherein the element having an unshared electron pair contained in the thermoplastic resin comprises any one kind or two or more kinds of elements selected from the group consisting of sulfur, oxygen, and nitrogen.

8. An aluminum-resin bonded body according to any one of claims 1 to 7, wherein the thermoplastic resin containing an element having an unshared electron pair in a repeat unit and/or at an end comprises any one kind or two or more kinds of resins selected from the group consisting of: a polyphenylene sulfide-based resin; a polyester-based resin; a polycarbonate-based resin; a polyacetal-based resin; a polyether-based resin; a polyphenylene ether-based resin; a polyimide-based resin; a polyether imide-based resin; a liquid crystal polymer; a sulfone-based resin; a polyphenylene oxide-based resin; a polyamide-based resin; and a polypropylene-based resin.

9. An aluminum-resin bonded body according to any one of claims 1 to 8, wherein the molded resin has a carbonyl group (C=O) .

10. A process for producing an aluminum-resin bonded body, comprising:
a film-forming step of forming an oxygen-containing film on a surface of an aluminum substrate formed of aluminum or an aluminum alloy; and
a resin-molding step of forming a molded resin on the oxygen-containing film of the surface-treated aluminum substrate obtained in the film-forming step, by injection molding of a thermoplastic resin,
to produce an aluminum-resin bonded body in which the aluminum substrate and the molded resin are bonded through intermediary of the oxygen-containing film,
wherein the thermoplastic resin comprises a thermoplastic resin containing an element having an unshared electron pair in a repeat unit and/or an end.

11. A process for producing an aluminum-resin bonded body, comprising:
a film-forming step of forming an oxygen-containing film on a surface of an aluminum substrate formed of aluminum or an aluminum alloy;
a resin-molding step of forming a molded resin by injection molding of a thermoplastic resin; and
an aluminum-resin-bonding step of bonding the molded resin obtained in the resin-molding step onto the oxygen-containing film of the surface-treated aluminum substrate obtained in the film-forming step, by thermocompression bonding,
to produce an aluminum-resin bonded body in which the aluminum substrate and the molded resin are bonded through intermediary of the oxygen-containing film,
wherein the thermoplastic resin comprises a thermoplastic resin containing an element having an unshared electron pair in a repeat unit and/or an end.

12. A process for producing an aluminum-resin bonded body according to claim 10 or 11, wherein the film-forming step comprises forming an oxygen-containing film containing a zinc element on the surface of the aluminum substrate by zinc-containing film-forming treatment involving immersing the aluminum substrate in a zinc ion-containing alkali aqueous solution containing an alkali hydroxide (MOH) and a zinc ion (Zn⁺²) at a weight ratio (MOH/Zn⁺²) of 1 to 100.

13. A process for producing an aluminum-resin bonded body according to claim 12, wherein an alkali source in the zinc ion-containing alkali aqueous solution comprises any one kind or two or more kinds of alkali hydroxides selected from the group consisting of sodium hydroxide, potassium hydroxide, and lithium hydroxide.

14. A process for producing an aluminum-resin bonded body according to claim 12 or 13, wherein a zinc ion source in the zinc ion-containing alkali aqueous solution comprises any one kind or two or more kinds of zinc salts selected from the group consisting of zinc oxide, zinc hydroxide, zinc peroxide, zinc chloride, zinc sulfate, and zinc nitrate.

15. A process for producing an aluminum-resin bonded body according to claim 10 or 11, wherein the film-forming step comprises forming, on the surface of the aluminum substrate formed of aluminum or an aluminum alloy, an oxygen-containing film containing any one kind or two or more kinds of aluminum compounds selected fromAl (OH)₃, AlO(OH), Al₂O₃, Al(PO₄), Al₂(HPO₄)₃, Al(H₂PO₄)₃, and AlOSiO₂ by treating the aluminum substrate by any one kind of aluminum film-forming treatment selected from: warm water immersion treatment involving immersion in warm water at 50°C or more for 60 sec or more; water vapor treatment involving exposure to a water vapor atmosphere under pressurized conditions of 0 . 1 MPa or more and 1 min or more; phosphoric acid treatment involving immersion in a phosphoric acid-based aqueous solution containing any one kind or two or more kinds of phosphate ion species selected from the group consisting of a phosphate ion, a monohydrogen phosphate ion, and a dihydrogen phosphate ion in a range of from 0.1 to 100 g/L for 30 sec to 30 min, followed by drying with hot air at 80 to 400°C for 30 sec to 30 min; and anodic oxidation treatment.

16. An aluminum-resin bonded body according to claim 10 or 11, wherein the film-forming step comprises forming an oxygen-containing film by laser treatment involving heating a vicinity of the surface of the aluminum substrate formed of aluminum or an aluminum alloy.

17. A process for producing an aluminum-resin bonded body according to any one of claims 10 to 16, wherein the element having an unshared electron pair contained in the thermoplastic resin comprises any one kind or two or more kinds of elements selected from the group consisting of sulfur, oxygen, nitrogen, and carbon.

18. A process for producing an aluminum-resin bonded body according to any one of claims 10 to 17, wherein the thermoplastic resin containing an element having an unshared electron pair in a repeat unit and/or at an end comprises any one kind or two or more kinds of resins selected from the group consisting of: a polyphenylene sulfide-based resin; a polyester-based resin; a polycarbonate-based resin; a polyacetal-based resin; a polyether-based resin; a polyphenylene ether-based resin; a polyimide-based resin; a polyether imide-based resin; a liquid crystal polymer; a sulfone-based resin; a polyphenylene oxide-based resin; a polyamide-based resin; and a polypropylene-based resin.
